Europäisches Patentamt

European Patent Office

Office européen des brevets

(19)

(11) EP 0 716 877 A1

(12) EUROPEAN PATENT APPLICATION

(43) Date of publication:
19.06.1996 Bulletin 1996/25

(51) Int Cl.$^6$: B01D 53/94

(21) Application number: 95308884.6

(22) Date of filing: 07.12.1995

(84) Designated Contracting States:
BE DE ES FR GB IT SE

(30) Priority: 13.12.1994 GB 9425062
18.05.1995 GB 9510066

(71) Applicant: JOHNSON MATTHEY PUBLIC LIMITED
COMPANY
London EC1N 8JP (GB)

(72) Inventors:
• Brisley, Robert J.
Duxford, Cambs CB2 4RB (GB)

• Collins, Neil R.
Cambs CB1 1HX (GB)
• Law, Donald
Orwell, Nr Royston, Herts SG8 5QZ (GB)

(74) Representative: Brewer, Leonard Stuart
Patents Department
Johnson Matthey Technology Centre
Blounts Court
Sonning Common
Reading Berkshire RG4 9NH (GB)

(54) Catalytic purification of engine exhaust gas

(57) A combined catalyst-hydrocarbon trap for the treatment of the exhaust gas of an engine to combat air pollution comprises (1) an underlayer comprising adsorber which adsorbs hydrocarbon from the exhaust gas at a lower temperature and desorbs it at a higher temperature, the adsorber comprising zeolite of silica to alumina weight ratio greater than 300, and (2) an overlayer, arranged over the underlayer, which overlayer comprises catalyst on a support which does not adsorb the hydrocarbon preferentially compared to water, the catalyst being catalytically active for the conversion of the hydrocarbon to carbon dioxide and water, the underlayer and overlayer being so arranged that exhaust gas passes through the overlayer to the underlayer for the underlayer to adsorb the hydrocarbon at the lower temperature, and that the hydrocarbon subsequently desorbed at the higher temperature passes back through the overlayer.

EP 0 716 877 A1

## Description

This invention relates to apparatus for combatting air pollution from the exhaust gas of an engine, particularly an internal combustion engine, and to the preparation and use of the apparatus.

The treatment of the exhaust gas of an engine to combat air pollution by passing the gas over a catalyst to render the polluting ingredients in the gas innocuous is well known. In particular, three-way catalysts are thus used to treat the exhaust gas of petrol-engined vehicles, oxidising carbon monoxide and hydrocarbons to carbon dioxide and water while reducing nitrogen oxides to nitrogen. Though the treatment of exhaust gas by a catalyst decreases markedly the amount of pollutants emitted into the air, a limitation exists in that effective operation of the catalyst occurs only after it has heated up sufficiently, past its light-off temperature. Thus, after an engine has been started up from cold, control of pollutants, including hydrocarbons, is not achieved until the catalyst has heated up to its operating temperature.

To try to alleviate this problem, it has been proposed to employ a trap to adsorb the hydrocarbons at lower temperature and then desorb them at higher temperature for treatment by a down-stream catalyst when the exhaust gas has heated the trap and catalyst. A disadvantage of this technique is the desorption of hydrocarbons before the catalyst has heated up to its operating temperature. By-pass systems with appropriate valves have been proposed to overcome this disadvantage.

US patent specification 5078979 discloses a process for treating a cold-start engine exhaust gas stream containing hydrocarbons and other pollutants consisting of flowing said engine exhaust gas stream over a molecular sieve bed which preferentially adsorbs the hydrocarbons over water to provide a first exhaust stream, and flowing the first exhaust gas stream over a catalyst to convert any residual hydrocarbons and other pollutants contained in the first exhaust gas stream to innocuous products and provide a treated exhaust stream and discharging the treated exhaust stream into the atmosphere, the molecule sieve bed being characterised in that it comprises at least one molecular sieve selected from the group consisting of molecular sieves which have: 1) a framework Si:Al ratio of at least 2.4; 2) are hydrothermally stable; and 3) have a defined hydrocarbon selectivity ($^\alpha$HC-$H_2$O) greater than 1.

Canadian patent specification 2110139 discloses an exhaust gas purification system for reducing hydrocarbon emissions during the cold start of combustion engines containing a hydrocarbon adsorber and a down-stream catalyst system composed of a three-way catalyst or a combination of oxidation, reduction and/or three-way catalysts in one or more beds, characterised in that the difference between the light-off temperature $T_A$ of the oxidation or three-way catalyst for the conversion of hydrocarbons and the desorption temperature $T_D$ of the absorber immediately up-stream is less than 50°C, ie, $T_A - T_D < 50°C$.

International patent specification WO 94/11623 discloses a method of treating an engine exhaust gas stream containing hydrocarbons and other pollutants at least during a cold-start period of operation, the method comprising the steps of:

(a) flowing the exhaust gas stream through a first catalyst zone having therein a first catalyst effective at least for the conversion of some of the pollutants to innocuous products;

(b) flowing the effluent of the first catalyst zone through an adsorbent zone comprising an adsorbent effective to temporarily adsorb at least some hydrocarbons remaining in the gas stream;

(c) flowing the effluent of the adsorbent zone through a second catalyst zone comprising a second catalyst effective at least for the conversion of hydrocarbons to innocuous products; and

(d) transferring heat from the first catalyst zone to the second catalyst zone to improve the efficacy of the second catalyst at least during the cold-start period of operation.

US patent specification 5244852 discloses a three-way catalyst (TWC) system that can be used for the removal of hydrocarbons, carbon monoxide and oxides of nitrogen from waste gas, the TWC system comprising a substrate supporting a catalyst, the catalyst comprising a washcoat consisting of:

1. zeolite selected from the group consisting of ZSM zeolite and silicalite, the zeolite mixed with high surface area oxide, and

2. salt solution of a noble metal, the noble metal selected from the group consisting of platinum and palladium,

the washcoat being characterised in that substantially all of the noble metal is sited on the high surface area oxide such that both the noble metal and the zeolite are available to catalyse reactants in the waste gas most suited for their respective properties.

Japanese patent specification 6-327978 discloses a catalyst for purifying exhaust gas emissions, which catalyst consists of (1) a certain crystalline aluminosilicate reformulated to increase X-ray intensity by more than 4%, and (2) a catalyst element consisting of a ceramic support and at least one catalytic metal or metal oxide of group Ib, VIIa, Fe group and Pt group.

The present invention provides a combined catalyst-hydrocarbon trap for the treatment of the exhaust gas of an engine to combat air pollution, which catalyst-hydrocarbon trap comprises (1) an underlayer comprising adsorber which adsorbs hydrocarbon from the exhaust gas at a lower temperature and desorbs it at a higher temperature, the adsorber comprising zeolite of silica to alumina weight ratio greater than 300, and (2) an overlayer, arranged over the underlayer, which overlayer comprises catalyst on a support which does not adsorb the hydrocarbon preferentially compared to water, the catalyst being catalytically active for the conversion of the hydrocarbon to carbon dioxide and water, the underlayer and overlayer being so arranged that exhaust gas passes through the overlayer to the underlayer for the underlayer to adsorb the hydrocarbon at the lower temperature, and that the hydrocarbon subsequently desorbed at the higher temperature passes back through the overlayer.

The invention also provides a process for preparing the catalyst-trap, which process comprises coating the underlayer with the overlayer.

The invention provides also a method of combatting air pollution from the exhaust gas of an engine, which method comprises passing the exhaust gas over the catalyst-trap.

The present apparatus is much simpler than arrangements which have by-pass systems or heat exchangers since they are not necessary with the present apparatus. In arrangements in which an adsorber is up-stream of the catalyst (including the arrangement briefly referred to in the Canadian specification mentioned above, in which an adsorber layer lies on a catalyst layer), it is the adsorber which encounters the exhaust gas first. The adsorber consequently acts as a heat sink; during the warm-up phase from cold, the catalyst encounters cooler exhaust gas because the gas has lost heat to the up-stream adsorber. Hence, the catalyst is delayed from reaching its light-off temperature (which can be defined as the temperature at which the catalyst converts 50% by mass of the hydrocarbon). It can be seen that this does not happen in the present invention; the exhaust gas encounters first the overlayer and hence heats the catalyst more quickly. Again, in an arrangement in which an adsorber is up-stream of the catalyst, the exhaust gas heats the adsorber containing adsorbed material before it encounters the catalyst, and hence tends to desorb hydrocarbon before the catalyst has heated up to its operating temperature, unless a by-pass system is employed. In contrast, in the present invention the exhaust gas uses its heat first to heat up the catalyst, hence delaying desorption of the adsorbed hydrocarbon. When light-off of the catalyst in the present invention has occurred, the exothermic reaction can heat up the underlayer and hence encourage the desorption of stored hydrocarbon which the catalyst can now treat effectively. In addition, the present adsorber, being under the overlayer, is protected by the overlayer from poisons in the exhaust gas which can harm the adsorber. Examples of such poisons are lead or sulphur from a petrol (gasoline) engine, sulphur from a diesel engine, or zinc, phosphorus or calcium from oil used as lubricant in the engine. Yet we have found that though the overlayer is above the adsorber layer, the present adsorber can still store and release hydrocarbon without significant impairment by the overlayer through which the gas passes. Further, the present combined catalyst and trap is simpler and more compact than separate such items. It can be seen that in the present invention, on starting the engine from cold the exhaust gas encounters the catalyst first to use its heat to most advantage, and then the same catalyst is used to treat desorbed hydrocarbon. This arrangement is much simpler than using two separate catalysts, one-up-stream of the adsorber and one down-stream, possibly with heat exchanging means between the two catalysts. The present adsorber comprises zeolite of silica to alumina weight ratio greater than 300. We have found that this feature in combination with the adsorber being under the catalyst layer results in an extremely effective catalyst-hydrocarbon trap. This zeolite has a much higher silica to alumina weight ratio than normal. The zeolite, compared to zeolites with a lower silica to alumina ratio, has a more pronounced selectivity to adsorption of hydrocarbons over adsorption of water in the early cold start period, and this is advantageous. In addition, the present zeolite, being under the catalyst layer is protected from the varying heat of the exhaust gas which occurs during normal running of the engine, and by using a zeolite of the present silica to alumina ratio, the arrangement is particularly durable under operating conditions.

The present combined catalyst-trap has an underlayer which adsorbs hydrocarbon and an overlayer which catalyses its conversion to carbon dioxide and water. Both layers are of sufficient thickness as to achieve their purposes. Generally, the underlayer is 10-150 microns thick. Generally, the overlayer is also 10-150 microns thick. Generally, the ratio of the thickness of the underlayer to the thickness of the overlayer is from 1:10 to 5:1.

Known materials can be used for the underlayer or overlayer. Some of these materials are disclosed in the prior specifications mentioned above.

The underlayer comprises adsorber which adsorbs hydrocarbon from the exhaust gas at a lower temperature and desorbs it at a higher temperature. Such adsorbers in themselves are well known. As is known, the adsorber should adsorb a large amount of hydrocarbon, should adsorb hydrocarbon preferentially over water vapour, which is present in abundance in the exhaust gas (ie the adsorber should be hydrophobic, which can be intrinsic or provided by suitable treatment) and be stable at the relatively high temperatures encountered. The present adsorber comprises zeolite of silica to alumina weight ratio greater than 300. The ratio can be greater than 500. It is usually up to 1000. The zeolite may have been treated in known way to increase its silica to alumina weight ratio to the present level of greater than 300.

The present zeolite can be natural or synthetic. Preferred zeolites are ZSM-5, zeolite Y, zeolite 11, beta zeolite or silicalite, particularly ZSM-5. Zeolite Y is a wide-pore zeolite with a pore diameter of 0.74nm, a pore volume of 0.3ml/g and a specific surface area of more than $700m^2/g$. Zeolite ZSM-5 is a medium-pore zeolite with a pore diameter of about 0.55nm and a specific surface area of $400m^2/g$. Silicalite also has a pore diameter of about 0.55nm and a specific surface area of $400m^2/g$. The zeolite may be treated, for instance by the known techniques of acid leaching, steam treatment or ion exchange.

The present adsorber can be a combination of different adsorber materials, at least one being the present zeolite. For instance, the underlayer can have a first layer comprising an adsorber material, which layer is arranged over a second layer, the second layer comprising a different adsorber material. Alternatively, the underlayer can have a front portion comprising an adsorber material, and a rear portion comprising a different adsorber material. When the adsorber is a combination of different adsorber materials, they can each be zeolite of silica to alumina weight ratio greater than 300, or one or more can be such zeolite while one or more is not. The present zeolite can be used in combination with at least one other molecular sieve adsorber within whose molecular sieve pores the hydrocarbon adsorption and desorption occurs. Molecular sieves are highly porous crystals whose pores are of molecular dimension. Such other adsorber can comprise for instance one or more of activated carbon, alumina, silica, zirconia, ALPO and zeolite; zeolites are preferred, for instance those discussed above but which are of silica to alumina weight ratio not greater than 300. Thus, mixtures of zeolites can be employed, for instance a mixture of an ion-exchanged zeolite and a non-ion-exchanged zeolite. Preferably, at least 50% by weight of the adsorber is the present zeolite, and it is especially preferred that the adsorber consists of the present zeolite.

The micropore diameter of the adsorber can be, for instance, 3 to 8Å. The adsorber has a specific surface area usually of 200-800, preferably 300-500, $m^2/g$. Specific surface areas referred to herein are as measured by the B.E.T. nitrogen method.

The overlayer comprises catalyst on a support. The support does not adsorb the hydrocarbon preferentially compared to water. Hence, the present catalyst-trap is distinguished from a mere catalyst-impregnated adsorber which adsorbs the hydrocarbon preferentially compared to water. The present support usually does not adsorb the hydrocarbon within molecular sieve pores; it may, however, adsorb some of the hydrocarbon in its pore structure otherwise or on its surface. The support can be a conventional washcoat material. A refractory metal oxide is suitable, for example one or more of alumina, ceria and zirconia. Preferably, the support comprises alumina, especially γ-alumina. Especially preferred is the support comprising a mixture of alumina and ceria, particularly comprising a mixture of alumina, ceria and zirconia, for instance in an alumina:ceria:zirconia weight ratio of 3-10:2-8:1. The weight ratio of support to the adsorber is usually 0.1-2:1. As is known, the support can contain stabiliser.

The catalyst catalyses the conversion of the hydrocarbon to carbon dioxide and water. The catalyst can be conventional. Preferably it catalyses also the conversion of other pollutants in the exhaust gas, particularly carbon monoxide to carbon dioxide, or nitrogen oxides to nitrogen, especially both. The catalyst preferably comprises platinum group metal, particularly one or more of platinum, palladium, rhodium, ruthenium and iridium, preferably one or more of platinum, palladium and rhodium, especially platinum and/or palladium. A particularly useful catalyst comprises platinum and palladium in a weight ratio of Pt:Pd from 1:3 to 1:20, for instance from 1:5 to 1:10. The catalyst can comprise platinum group metal in admixture with base metal promoter, usually one or more of lanthanum, yttrium, cerium, zirconium and Group I, Group II, and transition metal, promoters, for instance one or more of barium, strontium and calcium, *eg* strontium. The promoter may reduce the light-off temperature of the catalyst. The weight ratio of platinum group metal to base metal promoter is usually in the range 1:2 to 1:100. The weight ratio of the catalyst to the support is usually in the range 1:4 to 1:800.

The underlayer and overlayer are so arranged that (a) exhaust gas passes through the overlayer to the underlayer for the underlayer to adsorb the hydrocarbon at the lower temperature, and (b) the hydrocarbon subsequently desorbed at the higher temperature passes back through the overlayer.

The underlayer and overlayer are preferably carried on a carrier, though it is possible for the underlayer to form its own core, *eg* of pellets, beads, mesh, foam or honeycomb monolith. The carrier can be a conventional carrier. It can be pellets, beads, foam or mesh. Preferably, however, the carrier is a honeycomb monolith, so that the catalyst-trap comprising the underlayer and overlayer is carried in the channels of the honeycomb monolith. The monolith can be metal or ceramic. It usually contains 50-1000 channels per square inch (8-155 per square cm) of cross-section through which the exhaust gas flows.

The honeycomb monolith usually contains 800-40000g of the catalyst per $m^3$. Preferably, the monolith contains 800-12500g of platinum group metal per $m^3$. The monolith usually contains 6000-250000g of the support per $m^3$. The monolith usually contains 5000-200000g of the adsorber per $m^3$.

The underlayer usually contains a binder binding the adsorber to the carrier. The binder can be conventional. It may comprise for instance one or more of silica, alumina, ceria and zirconia. Silica is preferred, especially colloidal silica. The weight ratio of adsorber to binder is usually from 1:5 to 5:1. The underlayer preferably consists essentially of the adsorber and binder.

The present combined catalyst-hydrocarbon trap can be prepared by coating the underlayer with the overlayer. Usually a carrier, preferably a honeycomb monolith, is coated with the underlayer and then with the overlayer. The carrier can be coated with a mixture of the adsorber and binder, for instance by applying a slurry of the mixture in water, of solids content 40-80%. When the desired loading of the adsorber on the carrier has been achieved, *eg* after one or two coatings, the carrier can be dried and calcined to fix the coating to the carrier.

The underlayer can be coated with the overlayer by applying to the underlayer a slurry of the support, which optionally is in admixture with the catalyst or a precursor thereof. The coated material can then be dried. If the support has been applied without the catalyst or precursor, the catalyst or precursor is then applied. The catalyst can be formed on the support in a conventional way, before or after applying the support to the underlayer. Suitably, a solution in water of catalyst salt is applied to the support, which is then dried and calcined to decompose the salt to the catalyst. The catalyst salt can be for instance tetraammine platinum(II) acetate, chloroplatinic acid, tetraammine palladium(II) nitrate, rhodium(III) nitrate or ruthenium(III) trichloride. A promoter part of the catalyst can be formed similarly, for instance lanthanum nitrate can be applied separately but preferably together with salt of the platinum group metal or other main part of the catalyst.

The present combined catalyst-hydrocarbon trap can be used in conjunction with other catalysts, up-stream or down-stream, or with other apparatus, for treating exhaust gas, especially for alleviating the cold start problem. For instance, an electrical heater can be employed for the catalyst.

In use, the exhaust gas of an engine is passed over the combined catalyst-hydrocarbon trap, preferably by passing the gas through the channels of a honeycomb monolith carrier which carry the combined catalyst-trap. The engine is preferably an internal combustion engine. The engine can be fuelled by alkanol but preferably it is fuelled by hydrocarbon. The engine can be a diesel engine but preferably is a petrol engine. The engine is preferably that of a vehicle, especially that of a car.

As the engine warms up from cold, the catalyst has not yet reached its operating temperature. Hydrocarbons in the exhaust gas are adsorbed by the adsorber in the underlayer. The overlayer absorbs heat from the exhaust gas and heats up the catalyst. The underlayer also heats up. The catalyst reaches its light-off temperature and converts hydrocarbons to carbon dioxide and water. When the adsorber has heated up to its desorption temperature, hydrocarbon is desorbed. The adsorber has trapped hydrocarbon until the catalyst is more able to convert it, and the emissions of hydrocarbon have been reduced. Advantageously, as the catalyst achieves light-off the exothermic reaction promotes the desorption of the adsorbed hydrocarbon in the adsorber and the hydrocarbon is converted by the catalyst in the overlayer. After light-off has been achieved, the catalyst can then perform its conversion of pollutants in the normal way.

The invention is illustrated by the following Examples.

## EXAMPLE 1

Equal weights of ZSM-5 zeolite having a silica:alumina weight ratio of 350 and colloidal silica are made into a slurry with water, giving a solids content of 55%. The slurry is poured onto a conventional cordierite honeycomb monolith of 400 channels per $in^2$ (400 per 6.5 $cm^2$) and allowed to flow through the carrier. The water is then removed by heating, and the coated monolith then calcined. The monolith is coated with the slurry such that after the calcination there is 2.0g of coating per $in^3$ (16.4$cm^3$) of the monolith.

The monolith is then coated in an analogous manner with a slurry containing gamma alumina, ceria, zirconia and water, at a solids content of 40%. After drying and calcining, this coating provides an alumina/ceria/zirconia support. The monolith is coated with the slurry such that after the calcination there is 1.0g of coating per $in^3$ (16.4$cm^3$) of the monolith. This second coat forms a discrete layer over the zeolite/silica layer.

Palladium nitrate and tetraammine platinum(II) acetate are dissolved in water at a concentration such that on absorption by the monolith, palladium and platinum loadings of 300 and 37.5g per $ft^3$ (0.028$m^3$) of monolith respectively are achieved. After its impregnation, the monolith is dried and then calcined.

## EXAMPLE 2

Equal weights of ZSM-5 zeolite having a silica:alumina weight ratio of 350 and colloidal silica are made into a slurry with water, giving a solids content of 55%. The slurry is poured onto a conventional cordierite honeycomb monolith of 400 channels per $in^2$ (400 per 6.5 $cm^2$) and allowed to flow through the carrier. The water is then removed by heating, and the coated monolith then calcined. The monolith is coated with the slurry such that after the calcination there is 2.0g of coating per $in^3$ (16.4 $cm^3$) of the monolith.

The monolith is then coated in an analogous manner with a slurry containing gamma alumina, ceria, zirconia and water, at a solids content of 40%. After drying and calcining this coating provides an alumina/ceria/zirconia support. The monolith is coated with the slurry such that after the calcination there is 1.0g of coating per in$^3$ (16.4cm$^3$) of the monolith. This second coat forms a discrete layer over the zeolite/silica layer.

Palladium(II) nitrate and lanthanum nitrate are dissolved in water at a concentration such that on absorption by the monolith, palladium and lanthanum loadings of 150 and 400g per ft$^3$ (0.028m$^3$) of monolith respectively are achieved. After impregnation, the monolith is dried and then calcined.

## EXAMPLE 3

Example 1 is followed except that there is 1.0g of the zeolite/silica coating per in$^3$ (16.4cm$^3$) of the monolith, and 2.0g of the alumina/ceria/zirconia coating per in$^3$ (16.4cm$^3$) of the monolith.

## EXAMPLE 4

The catalyst-hydrocarbon trap of Example 3 was evaluated in comparison with corresponding catalyst only and corresponding hydrocarbon trap only. The catalyst was prepared following Example 3 except that the monolith was not coated with the zeolite and silica, and the alumina/ceria/zirconia coating was increased to 2.5g of coating per in$^3$ (16.4cm$^3$) of the monolith. The hydrocarbon trap was prepared following Example 3 except that the monolith was not coated with the alumina/ceria/zirconia coating and impregnated with the palladium and platinum, and instead the coating of zeolite and silica was increased to 2.5g in$^3$ (16.4cm$^3$).

The evaluation of these three devices was conducted using the Economic Commission for Europe (ECE) proposed stage 3 test procedure on a 1.3 litre Skoda Favorit motor car, which is calibrated to the stage 2 requirements (the 94/12/EWG regulations of the European Union, which come into effect in 1996). A thermocouple was placed immediately before the inlet face of the device to measure accurately the exhaust gas temperature. Two constant volume sampling (CVS) gas lines were fitted to the exhaust system immediately before and after the device. The devices were vehicle tested both fresh and after 40 hours of 900°C lean spike ageing *(ie* fuel cut-off conditions) on a statically mounted 3.5 litre engine.

The two gas sampling lines were used to measure absolute concentrations of hydrocarbon (HC) released by the engine at the inlet and outlet face of the device. Hence the HC storage and release of the devices were measured. HC concentrations at the two sampling points were used to calculate mathematically an expression of HC efficiency. The calculation is as follows:

$$\text{Hydrocarbon Efficiency} = \frac{\text{Inlet Face HC Concentration - Outlet Face Concentration}}{\text{Inlet Face HC Concentration}} \times 100\%$$

The results of the evaluation of the fresh devices are shown in Table 1.

## Table 1

| Time Into ECE Stage 3 Test (Secs) | HC Efficiency Catalyst-HC Trap (%) | HC Efficiency Catalyst (%) | HC Efficiency HC Trap (%) | Device Inlet Face Temp ($^\circ$C) | CVS Vehicle Speed (km/hr) |
|---|---|---|---|---|---|
| 0 | 90 | 80 | 80 | 20 | 0 |
| 5 | 90 | 60 | 80 | 20 | 0 |
| 10 | 90 | -60 | 80 | 50 | 10 |
| 15 | 75 | -30 | 75 | 70 | 15 |
| 20 | 55 | -10 | 55 | 115 | 15 |
| 25 | 40 | 0 | 41 | 150 | 10 |
| 30 | 40 | 5 | 40 | 140 | 0 |
| 35 | 40 | 3 | 40 | 130 | 0 |
| 40 | 38 | 3 | 40 | 132 | 0 |
| 45 | 38 | 4 | 40 | 133 | 0 |
| 50 | 12 | 3 | 39 | 134 | 20 |
| 55 | 0 | 3 | 10 | 142 | 35 |
| 60 | -20 | 2 | 0 | 185 | 35 |

EP 0 716 877 A1

| Time Into ECE Stage 3 Test (Secs) | HC Efficiency Catalyst-HC Trap (%) | HC Efficiency Catalyst (%) | HC Efficiency HC Trap (%) | Device Inlet Face Temp ($^\circ$C) | CVS Vehicle Speed (km/hr) |
|---|---|---|---|---|---|
| 65 | -20 | 60 | -25 | 225 | 35 |
| 70 | 10 | 80 | -35 | 248 | 35 |
| 75 | 42 | 91 | -40 | 270 | 35 |
| 80 | 60 | 96 | -35 | 280 | 35 |
| 85 | 70 | 96 | -28 | 283 | 20 |
| 90 | 82 | 97 | -20 | 268 | 0 |
| 95 | 86 | 98 | -17 | 230 | 0 |
| 100 | 92 | 98 | -16 | 200 | 0 |
| 105 | 94 | 98 | -13 | 180 | 0 |
| 110 | 96 | 98 | -8 | 170 | 0 |
| 115 | 97 | 98 | 0 | 160 | 0 |
| 120 | 97 | 98 | 2 | 165 | 10 |
| 125 | 98 | 98 | 1 | 190 | 20 |
| 130 | 98 | 98 | 0 | 220 | 30 |
| 135 | 98 | 98 | -1 | 270 | 40 |
| 140 | 98 | 98 | 0 | 280 | 50 |
| 145 | 98 | 98 | -1 | 300 | 50 |
| 150 | 98 | 99 | 0 | 300 | 50 |

The evaluation of the aged devices showed very similar results.

The Table illustrates relative differences between the catalyst only, HC trap only and combined catalyst-HC trap devices as functions of:

(1) time into the first part of the ECE test (in seconds);
(2) inlet face temperature; and
(3) vehicle speed on the CVS laboratory rolling road.

Analysis of Table 1:

Catalyst Only

Table 1 shows that apart from a very brief period (<10 seconds) where the catalyst stores some HC, the catalyst does not store HC to any significant extent. Following this brief storage period, the HC is very rapidly re-released and the hydrocarbon efficiency values fall to near zero. At inlet face temperatures of around 225°C, the catalyst can be seen to have achieved "light-off" and at temperatures of around 280°C has reached nearly 100% hydrocarbon efficiency (or % HC conversion).

8

<u>HC Trap Only</u>

Table 1 shows the HC trap stores HC emissions for up to 65 seconds into the test, corresponding to an inlet-face temperature of around 225°C and vehicle speed of some 35km/hour. From 60 seconds to 120 seconds, the HC trap then releases the previously stored HC back into the exhaust gas stream in an untreated manner. Beyond 120 seconds, the HC trap can be seen to have no further storage and release impact on HC emissions.

<u>Combined Catalyst-HC Trap</u>

The catalyst-HC trap provides a very efficient exhaust gas treatment. Table 1 shows an initial HC storage period similar to that of the HC trap alone, but where the HC trap alone releases the HC back into the exhaust stream, the catalyst-HC trap releases the HC from the adsorber in a way matched with (designed to overlap with) the catalyst layer lighting-off, so that the HC is converted to carbon dioxide and water. The result is to have combined successfully the performance characteristics of HC storage and release from the zeolitic adsorber layer with the light-off characteristics of the catalyst using a layering process. This overlap of HC release and catalyst light-off results in a clear reduction of the HC emissions in the first "cold-start" period of modern emissions testing procedures.

Furthermore, from the similarity of the HC efficiency figures up to light-off of the catalyst for the HC trap and the catalyst-HC trap it can be seen that combining the catalyst and adsorber layers in an overlayer and underlayer arrangement does not significantly affect the adsorber layer's ability to store and release HC as a result of being coated with the catalyst layer. Overlaying the adsorber layer with the catalyst layer does not present a (diffusion) barrier to HC in the important early "cold start" period, enabling the combined catalyst-HC trap to work well.

The results of vehicle testing (fresh and aged) are also shown in Table 2 below. The data in this Table are taken at the end of CVS Bag 1 (380 seconds into the 1200 second ECE stage 3 test procedure).

Table 2

| | Total Hydrocarbon, g/km | | |
|---|---|---|---|
| | Catalyst-HC Trap | Catalyst Only | HC-Trap Only |
| Fresh | 0.32 | 0.47 | 2.25 |
| Aged | 0.49 | 0.67 | 2.30 |

Table 2 clearly shows that the catalyst-HC trap achieves better HC performance than the catalyst only in the early "cold start" period of the ECE test. The catalyst-trap is able to trap the HC and combust it when release begins (see Table 1) and this results in Table 2 in lower HC emissions compared to a fully formulated conventional three-way catalyst.

The catalyst formulations in the case of the catalyst and catalyst-HC trap devices are identical in precious metal and base metal composition and loading. The observed reduction shown in Table 2, in HC emissions at the end of Bag 1, must be attributable, therefore, to the catalyst-HC trap having created an appropriate overlap of HC release from the lower, zeolite based adsorber, layer with light-off in the upper, catalyst, layer.

## EXAMPLE 5

This Example compares the present catalyst-hydrocarbon trap with a corresponding one whose zeolite has a lower silica to alumina weight ratio. The present catalyst-hydrocarbon trap had a silica to alumina ratio of 360 whereas that in the comparative catalyst-hydrocarbon trap was 80. These two devices and catalyst alone were made as described in Example 4 (but with the specified silica to alumina ratios), and the three devices were evaluated also as described in that Example. The total hydrocarbon at the end of CVS Bag 1 (380 seconds into the 1200 second total ECE stage 3 test procedure) is shown in Table 3 below.

Table 3

| | Total Hydrocarbon, g/km | | |
|---|---|---|---|
| | Catalyst-HC Trap $SiO_2$:$Al_2O_3$ 80 | Catalyst-HC Trap $SiO_2$:$Al_2O_3$ 360 | Catalyst Only |
| Fresh | 0.39 | 0.34 | 0.47 |
| Aged | 0.85 | 0.51 | 0.67 |

Table 3 shows that when comparing the catalyst-HC trap containing low $SiO_2:Al_2O_3$ ratio material with that containing high $SiO_2:Al_2O_3$ ratio material, no apparent benefit to hydrocarbon emissions control is obtained on fresh CVS testing, but that after ageing, the catalyst-HC trap containing the high ratio material is remarkably superior. It is also noticeable that the catalyst-HC trap containing low ratio material is then worse than the catalyst only device.

## EXAMPLE 6

Equal weights of ZSM-5 zeolite having a silica:alumina weight ratio of 350 and colloidal silica are made into a slurry with water, giving a solids content of 55%. The slurry is poured onto a conventional cordeirite honeycomb monolith of 400 channels per $in^2$ (400 per $6.5cm^2$) and allowed to flow through the carrier. The water is then removed by heating, and the coated monolith then calcined. The monolith is coated with the slurry such that after the calcination there is 1.0g of coating per $in^3$ ($16.4cm^3$) of the monolith.

The monolith is then coated in an analogous manner with a slurry containing gamma alumina, ceria, zirconia and water, at a solids content of 40%. After drying and calcining, this coating provides an alumina/ceria/zirconia support. The monolith is coated with the slurry such that after the calcination there is 2.0g of coating per $in^3$ ($16.4cm^3$). This second coat forms a discrete layer over the zeolite/silica layer.

Palladium nitrate and lanthanum nitrate are dissolved in water at a concentration such that on absorption by the monolith, palladium and lanthanum loadings of 200 and 200g per $ft^3$ ($0.028m^3$) of monolith respectively are achieved. After its impregnation, the monolith is dried and then calcined.

## EXAMPLE 7

The catalyst-hydrocarbon trap of Example 6 was compared with the corresponding catalyst only and hydrocarbon trap only made by the analogous procedure of Example 4. The evaluation was carried out as described in Example 4, and the total hydrocarbon at the end of CVS Bag 1 (380 seconds into the 1200 second total ECE stage 3 test procedure) is shown in Table 4 below.

Table 4

|  | Total Hydrocarbon, g/km | | |
|---|---|---|---|
|  | Catalyst-HC Trap | Catalyst Only | HC-Trap Only |
| Fresh | 0.48 | 0.63 | 2.31 |
| Aged | 0.65 | 0.83 | 2.35 |

The conclusions from Table 4 are similar to those from Table 2. This is as expected since the only difference between the catalyst-HC traps lies in the precious metal and base metal forming the catalyst. Again, the effectiveness of the combined catalyst-HC trap can be seen when compared with catalyst only and HC trap only.

## Claims

1. A combined catalyst-hydrocarbon trap for the treatment of the exhaust gas of an engine to combat air pollution, which catalyst-hydrocarbon trap comprises (1) an underlayer comprising adsorber which adsorbs hydrocarbon from the exhaust gas at a lower temperature and desorbs it at a higher temperature, the adsorber comprising zeolite of silica to alumina weight ratio greater than 300, and (2) an overlayer, arranged over the underlayer, which overlayer comprises catalyst on a support which does not adsorb the hydrocarbon preferentially compared to water, the catalyst being catalytically active for the conversion of the hydrocarbon to carbon dioxide and water, the underlayer and overlayer being so arranged that exhaust gas passes through the overlayer to the underlayer for the underlayer to adsorb the hydrocarbon at the lower temperature, and that the hydrocarbon subsequently desorbed at the higher temperature passes back through the overlayer.

2. A catalyst-trap according to claim 1 carried in the channels of a honeycomb monolith carrier.

3. A catalyst-trap according to claim 2 wherein the underlayer contains colloidal silica binding the adsorber to the carrier.

4. A catalyst-trap according to any one of the preceding claims wherein the ratio of the thickness of the underlayer

10

to the thickness of the overlayer is from 1:10 to 5:1.

5. A catalyst-trap according to any one of the preceding claims wherein the catalyst comprises platinum group metal which is one or more of platinum, palladium, rhodium, ruthenium and iridium.

6. A catalyst-trap according to any one of the preceding claims wherein the support comprises alumina.

7. A catalyst-trap according to claim 6 wherein the support comprises a mixture of alumina, ceria and zirconia.

8. A process for preparing a catalyst-trap claimed in any one of the preceding claims, which process comprises coating the underlayer with the overlayer.

9. A method of combatting air pollution from the exhaust gas of an engine, which method comprises passing the exhaust gas over a combined catalyst-hydrocarbon trap claimed in any one of claims 1-7.

10. A method according to claim 9 wherein the engine is a petrol engine.

**European Patent Office**

**EUROPEAN SEARCH REPORT**

Application Number

EP 95 30 8884

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | EP-A-0 582 971 (DEGUSSA AG) * page 3, line 48 - page 4, line 25; claims 1-8 * --- | 1-10 | B01D53/94 |
| Y | GB-A-2 252 968 (NIKKI-UNIVERSAL CO. LTD.) * page 3, line 35 - page 4, line 20 * * page 5, line 20 - line 36; claims 1-10 * --- | 1-10 | |
| Y,D | US-A-5 078 979 (UOP) * column 7, line 29 - column 8, line 14; claims 1-14 * --- | 1-3,5,6, 8-10 | |
| Y,D | EP-A-0 601 314 (DEGUSSA AG) * page 3, line 34 - page 4, line 2; claims 1-13; table 1 * --- | 1-3,5,6, 8-10 | |
| A | EP-A-0 584 737 (TOYOTA JIDOSHA KK) * claims 1,2; figure 1 * ----- | 1,2,5, 8-10 | |

TECHNICAL FIELDS SEARCHED (Int.Cl.6)

B01D

The present search report has been drawn up for all claims

| Place of search | Date of completion of the search | Examiner |
|---|---|---|
| THE HAGUE | 20 March 1996 | Eijkenboom, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)